# EUROPÄISCHE PATENTSCHRIFT

(11) **EP 3 159 309 B1**
(45) Veröffentlichungstag und Bekanntmachung des Hinweises auf die Patenterteilung: **27.02.2019**
(21) Anmeldenummer: 16194592.8
(22) Anmeldetag: 19.10.2016
(51) Int. Cl.: C02F 1/24, C02F 1/40, B01D 17/02, B03D 1/14

(54) **VERFAHREN UND VORRICHTUNG ZUR BEHANDLUNG VON FETTHALTIGEM ABWASSER**
METHOD AND DEVICE FOR HANDLING WASTEWATER CONTAINING FAT
PROCÉDÉ ET DISPOSITIF DESTINÉS AU TRAITEMENT D'EAUX USÉES CONTENANT DE LA GRAISSE

(30) Priorität: 20.10.2015 DE 102015117837
(43) Veröffentlichungstag der Anmeldung: 26.04.2017
(73) Patentinhaber: Ludwig Elkuch AG, 9487 Bendern (LI)
(72) Erfinder: SCHILLINGER, Jürgen, 77955 Ettenheim (DE)
(74) Vertreter: Prinz & Partner mbB

(56) Entgegenhaltungen:
- EP-A1- 0 306 559
- DE-A1- 19 938 248
- DE-U1-202008 018 158

## Beschreibung

Die Erfindung betrifft ein Verfahren und eine Vorrichtung zur Behandlung von fetthaltigem Abwasser, insbesondere von Küchenabwasser.

Abwässer dürfen nur in die Kanalisation eingeleitet werden, wenn diese örtlich vorgegebene Grenzwerte einhalten. Für die ordnungsgemäße Entsorgung von Abwässern ist es daher notwendig, das Abwasser vor dem Einleiten in die Kanalisation zu behandeln. Hierbei werden Fremdstoffe abgeschieden, die dann getrennt vom Abwasser entsorgt werden können, wodurch sich die Entsorgungskosten stark reduzieren lassen.

Für die Behandlung von Abwasser sind eine Vielzahl von Verfahren und Vorrichtungen bekannt. Für Abwässer mit einem hohen Anteil an fetthaltigen Fremdstoffen, wie sie beispielsweise in Großküchen anfallen, werden insbesondere Abwasseraufbereitungsanlagen mit Fettabscheidern eingesetzt.

Trotz der Behandlung der Abwässer, traten immer wieder Probleme mit zugesetzten Abwasserleitungen auf, die auf einen zu hohen Anteil an fetthaltigen Fremdstoffen im Abwasser zurück geführt wurden. Um dem entgegenzuwirken, wurden die zulässigen Grenzwerte weiter gesenkt. In vielen Fällen ist daher die Verwendung weiterer Reinigungsstufen hinter Fettabscheidern erforderlich, die einen hohen Platzbedarf aufweisen und mit höheren Kosten Verbunden sind.

Aus der DE 10 2004 014 517 A1 ist ein Verfahren zur Reduktion des CSB-Wertes und zum Abbau lipophiler Stoffe im Abwasser bekannt, bei dem das Abwasser zuerst in einen Schwerkraftabscheider geführt und anschließend in ein Entnahmebecken geleitet wird, von dem aus das Abwasser in eine separate Flotationsanlage gepumpt wird. Zu dem Abwasser werden Fällung- und Flockungsmittel zudosiert, um belastende Stoffe aus dem Abwasser auszufällen. Die ausgefällten Inhaltsstoffe werden in Form von Makroflocken, unterstützt durch mikroskopisch kleine Gasbläschen, als Flotat vom Abwasserstrom abgetrennt und dem Schwerkraftabscheider wieder zugeführt. Das im oberen Beckenbereich des Schwerkraftabscheiders gesammelte Flotat kann als Bestandteil der Schwimmschicht des Schwerkraftabscheiders entsorgt werden.

Die DE 199 38 248 A1 offenbart ein Verfahren zur Reinigung von mit Fetten oder Ölen verunreinigten Abwässern, bei dem der nicht emulgierte Anteil der fett- oder ölhaltigen Verunreinigungen in einem Schwerkraftabscheider zurückgehalten wird. Die so vorgereinigten Abwässer werden in einem nachgeschalteten Belüftungssystem oder einer Flotationsanlage nachgereinigt, indem noch vorhandene Verunreinigungen durch Luft- oder Gasbläschen an die Flüssigkeitsoberfläche getragen werden. Von dort werden die Verunreinigungen wieder dem Schwerkraftabscheider zugeleitet und gemeinsam mit den dort bereits abgeschiedenen Leichtstoffen entsorgt. Dem Belüftungssystem oder der Flotationsanlage kann ein Vorlagebecken vorgeschaltet sein.

Die EP 0 306 559 beschreibt eine Flotationsanlage mit einem mit einer Dispersion-Zuleitung versehenen Sammelbehälter, einem Flotationsbehälter, einer Einrichtung zum Einbringen von Luft in die zu reinigende Dispersion, einer Einrichtung zum dosierten Zugeben von Spaltmittel und einer Flotatentwässerungseinrichtung. Die Anlage umfasst eine Mischstrecke, die über eine erste Zuleitung mit dem Sammelbehälter verbunden ist, über eine zweite Zuleitung mit der Einrichtung zum dosierten Zuführen von Spaltmittel verbunden ist, über eine dritte Zuleitung mit der Lufteinbringungseinrichtung verbunden ist, und über eine vierte Zuleitung mit dem Flotationsbehälter verbunden ist, wobei die Zuleitungen in dieser Reihenfolge stromabwärts gesehen an die Mischstrecke angesetzt sind. In der Einrichtung zum Einbringen von Luft wird Reinwasser aus dem Flotationsbehälter mit unter Druck mit Luft gesättigt und nach Entspannung an einem Ventil unter Bildung von Mikroblasen in die Mischstrecke eingetragen.

Aufgabe der Erfindung ist es, ein einfaches aber dennoch wirksames Verfahren zur Aufbereitung fetthaltiger Abwässer sowie eine platzsparende und kostengünstige Abwasseraufbereitungsanlage zur Durchführung des Verfahrens bereitzustellen, die insbesondere für die Behandlung von fetthaltigem Küchenabwasser geeignet ist und aus der die behandelten Abwässer direkt in die Kanalisation eingeleitet werden können.

Zur Lösung der Aufgabe ist ein Verfahren zur Behandlung von fetthaltigem Abwasser gemäß Anspruch 1 und eine Vorrichtung gemäß Anspruch 6 vorgesehen.

Durch die Behandlung des Abwassers in mehreren Stufen, insbesondere durch die Druckentspannungsflotation in der zweiten Stufe, wird eine effektive Abscheidung von Fremdstoffen erreicht, sodass das gereinigte Abwasser auch Grenzwerte für lipophile Stoffe von unter 300 mg/l einhält und daher direkt in die Kanalisation eingeleitet werden kann. Die Druckentspannungsflotation bewirkt, dass die im vorbehandelten Abwasser noch enthaltenen lipophilen Fremdstoffe sich an die bei der Entspannung des Abwassers auf Normaldruck entstehenden Gasblasen anlagern und im dadurch gebildeten Schaum ansammeln. Die Entspannung des Abwassers erfolgt am Ende einer unter Druck stehenden Lösungsstrecke, an dem das Abwasser über ein Ventil entspannt und den zum Endabscheider führenden Transportleitungen zugeführt wird. Somit kann auf die Bereitstellung separater Flotationsanlagen verzichtet werden, die einen großen Bauraum erfordern. Die Verwendung eines kleinvolumigen Endabscheiders und die Rückführung des die lipophilen Stoffen enthaltenden Schaums in den Vorabscheider ermöglicht dann eine äußerst kompakte Bauweise der Abwasserbehandlungsanlage, sodass auch ein Einsatz in Kleinbetrieben möglich ist.

Das Abwasser wird vorzugsweise kontinuierlich durch die Behandlungsstufen a) bis c) geführt, wodurch die Effizienz des Verfahrens erhöht und die Abscheidung von Fremdstoffen verbessert wird. Die kontinuierliche Abwasserbehandlung bewirkt, dass der Vorabscheider relativ klein dimensioniert werden kann, da der Abwasserzulauf durch eine gesteuerte Ableitung von Abwasser aus dem Vorabscheider und Zuführung des Abwassers zur Druckentspannungsflotation ausgeglichen werden kann. Dadurch können auch die Entsorgungsintervalle verlängert werden, da der Vorabscheider länger betrieben werden kann, bevor eine Entsorgung der im Vorabscheider abgetrennten Schweb- und Sinkstoffe notwendig wird.

Gemäß einer bevorzugten Ausführungsform wird das Abwasser im Endabscheider in einer Spiralbewegung geführt. Auf diese Weise erhöht sich die Verweildauer des Abwassers im Endabscheider, wodurch den vorzugsweise lipophilen Fremdstoffen mehr Zeit zur Abscheidung zur Verfügung steht und der Endabscheider effektiver arbeitet.

Vorzugsweise wird das Verfahren bei Erreichen eines ersten Pegelstands im Vorabscheider unterbrochen, der durch ein unteres Limit an Abwasser im Vorabscheider gekennzeichnet ist, bis dem System wieder ausreichend Abwasser zum ordnungsgemäßen Ablauf des Verfahrens zur Verfügung steht. Alternativ oder zusätzlich kann bei Erreichen eines zweiten Pegelstands im Vorabscheider, der durch ein oberes Limit an Abwasser im Vorabscheider gekennzeichnet ist, eine Notreaktion ausgeführt werden. Diese Notreaktion dient dazu, ein Überlaufen oder eine Beschädigung der Vorrichtung zu verhindern und kann beispielsweise darin bestehen, dass Abwasser in einem Puffertank zwischengespeichert, die Pumpenleistung erhöht und/oder ein Warnsignal aktiviert wird.

Gemäß einer weiteren bevorzugten Ausführungsform werden dem Abwasser vor oder nach der Lösungsstrecke weitere Behandlungsmittel zugeführt. Bevorzugt sind die Behandlungsmittel aus der aus Fettspaltern, Deemulgatoren, pH-Modifikatoren, Flotationshilfsmitteln und deren Mischungen bestehenden Gruppe ausgewählt. Diese Behandlungsmittel verbessern das Abscheiden von lipophilen Fremdstoffen und machen das Verfahren noch effektiver.

Die Vorrichtung zur Durchführung des oben beschriebenen Verfahrens weist einen Zulauf für fetthaltiges Abwasser, einen Vorabscheider zur Abtrennung von Sink- und Schwimmstoffen mit einer Sammelzone für Sinkstoffe sowie eine Transportleitung zur Weiterleitung des vorbehandelten Abwassers auf. Ferner umfasst die Vorrichtung eine mit der Transportleitung für das vorbehandelte Abwasser verbundene Lösungsstrecke, eine Pumpe zum Eintragen von Gas in das vorbehandelte Abwasser in der Lösungsstrecke und einen über eine Schaumleitung mit der Lösungsstrecke verbundenen Endabscheider, der zur Abtrennung des Schaums mit lipophilen
Fremdstoffen von gereinigtem Abwasser vorgesehen ist. Der Endabscheider ist strömungsabwärts direkt mit dem Vorabscheider verbunden.

Die Verbindung des Endabscheiders mit dem Vorabscheider ermöglicht eine im Wesentlichen kontinuierliche Führung des Abwassers durch die jeweiligen Behandlungsstufen und einen Kreisbetrieb der Anlage mit Rückführung der im Endabscheider abgetrennten Fremdstoffe in den Vorabscheider.

Die kontinuierliche Abwasserbehandlung und der Kreisbetrieb der Anlage ermöglichen eine erhebliche Verlängerung der Entsorgungsintervalle im Vergleich zu herkömmlichen Behandlungsanlagen. Über die Menge des aus dem Vorabscheider entnommenen Abwasser kann der Pegelstand im Vorabscheider reguliert werden. Ein Überlaufen der Anlage im Normalbetrieb ist daher ausgeschlossen. Zur Entsorgung der im Vorabscheider abgeschiedenen Fremdstoffe kann der Pegelstand auf ein Minimum gesenkt werden. Damit werden Entsorgungskosten gespart, da die zu entsorgende Wassermenge reduziert ist.

Gemäß einer besonderen Ausführungsform ist der Endabscheider innerhalb des Vorabscheiders angeordnet. Dies hat den Vorteil, dass die Vorrichtung noch kompakter gestaltet werden kann und somit weniger Raum am Aufstellungsort einnimmt.

Der Endabscheider hat in einer bevorzugten Ausführungsform einen konisch zulaufenden Sammelraum mit einem Überlauf für den Schaum. Der Überlauf ist hierbei zur direkten Weiterleitung des die abgetrennten Fremdstoffe enthaltenden Schaums in den Vorabscheider vorgesehen. Insbesondere wird der Schaum dabei von oben in den Vorabscheider eingetragen und auf die als Sperrschicht wirkende Schicht aus lipophilen Schwimmstoffen im Vorabscheider aufgebracht. Dadurch kommt es dort zu keiner Verwirbelung der im Endabscheider abgeschiedenen lipophilen Fremdstoffe mit dem vorbehandelten Abwasser im Vorabscheider.

Gemäß einer weiteren bevorzugten Ausführungsform kann ein Grobfilter zwischen dem Abwasserzulauf zum Vorabscheider und der Transportleitung zur Lösungsstrecke vorgesehen sein. Mit dem Grobfilter werden großvolumige Fremdstoffe zurückgehalten, sodass diese die Führung des Abwassers in den Leitungen nach dem Vorabscheider nicht beeinträchtigen können. Bevorzugt ist der Grobfilter als Innenfilter im Vorabscheider angeordnet. Besonders bevorzugt befindet sich der Innenfilter unmittelbar vor einem Anschluss für die Transportleitung am Vorabscheider.

Vor der Lösungsstrecke kann ein erster Anschluss zur Zuführung von Gas angeordnet sein und die Pumpe zum Eintragen von Gas kann eine mit dem Anschluss verbundene Flotationspumpe, insbesondere eine Mehrphasenpumpe, zur Übersättigung des vorbehandelten Abwassers mit Gas sein. Auf diese Weise ist es möglich, das vorbehandelte Abwasser einer Druckentspannungsflotation zu unterziehen. Bei der Druckentspannungsflotation wird das vorbehandelte Abwasser in der Lösungsstrecke unter Druck mit Gas gesättigt, wobei Mikroblasen entstehen, die sich an emulgierte Fremdstoffe anlagern und diese von der wässrigen Phase trennen können. Die Lösungstrecke ist also ein rohrförmiger Leitungsabschnitt, in dem das Gas sich im Abwasser verteilen und mit den Fremdstoffen reagieren kann. Nach der Lösungsstrecke wird das unter Druck mit Gas gesättigte Abwasser durch Verringerung des Drucks über ein Ventil entspannt. Durch das Entspannen werden Emulsionen von lipophilen Fremdstoffen im vorbehandelten Abwasser weiter aufgespalten. Es bilden sich kleine Gasbläschen, die sich an die im Abwasser verbliebenen lipophilen Fremdstoffe anlagern und diese in einem Schaum binden. Der Schaum steigt aufgrund seiner geringeren Dichte in der von der Lösungsstrecke zum Endabscheider führenden Schaumleitung auf. Im Endabscheider können dann die lipophilen Fremdstoffe einfach vom gereinigten Abwasser getrennt werden.

Vorzugsweise umfasst der Endabscheider eine Struktur zur Verlängerung der Verweildauer des entspannten Abwassers. Diese Struktur kann beispielsweise in Form einer im Endabscheider angeordneten archimedischen Spirale ausgebildet sein. Die Struktur begünstigt die Abtrennung des gereinigten Abwassers vom Schaum und die Abscheidung von Fremdstoffen im Endabscheider.

Bevorzugt ist ein zweiter Anschluss zur Zuführung von Behandlungsmitteln vor und/oder nach der Lösungsstrecke vorgesehen. Behandlungsmittel wie beispielsweise Fettspalter, Deemulgatoren, pH-Modifikatoren, und Flotationshilfsmittel, welche die Abscheidung von Fremdstoffen begünstigen, können auf diese Weise dem Abwasser beigemischt werden, wodurch die Abscheidung von Fremdstoffen während der Druckentspannungsflotation und/oder im Endabscheider verbessert wird.

Gemäß einer vorteilhaften Ausführungsform ist eine Behandlungsschleife mit einer Elektrode vorgesehen, vorzugsweise zwischen dem Vorabscheider und der zur Mehrphasenpumpe führenden Transportleitung, in der eine elektrostatische Behandlung des Abwassers stattfindet. Die Behandlung des Abwassers mit einem elektrostatischen Feld führt zu einer verbesserten Abscheidung von lipophilen Fremdstoffen und damit zu einer höheren Reinheit des gereinigten Abwassers.

Gemäß einer weiteren vorteilhaften Ausführungsform weist die Behandlungsschleife ein Volumen auf, das etwa 50 bis 100 % des Volumens des Endabscheiders beträgt. Hierdurch kann elektrostatisch vorbehandeltes Abwasser kontinuierlich der Lösungsstrecke zugeführt werden, wodurch der Wirkungsgrad der Anlage erhöht wird.

Vorzugsweise ist die Elektrode regelbar. Auf diese Weise lässt sich die Leistung der Elektrode an den Verschmutzungsgrad des Abwassers sowie an die Anforderungen an das gereinigte Abwasser anpassen und damit die Energieeffizienz verbessern.

Die Behandlungsschleife kann weiter mit einem Pufferbehälter zur Aufnahme von vorbehandeltem Abwasser aus der Behandlungsschleife verbunden sein. Die Volumina der Behandlungsschleife, des Pufferbehälters und des Endabscheiders sind bevorzugt gleich, sodass eine im Wesentlichen kontinuierliche Abwasserbehandlung ermöglicht wird.

Weitere Vorteile und Merkmale ergeben sich aus der nachfolgenden Beschreibung in Verbindung mit den beigefügten Zeichnungen. In diesen zeigen:
- Figur 1 in einer perspektivischen Ansicht eine schematische Zeichnung einer erfindungsgemäßen Vorrichtung zur Behandlung von fetthaltigem Abwasser;
- Figur 2 in einer Frontansicht eine schematische Zeichnung einer erfindungsgemäßen Vorrichtung zur Behandlung von fetthaltigem Abwasser;
- Figur 3 in einer Seitenansicht eine schematische Zeichnung einer erfindungsgemäßen Vorrichtung zur Behandlung von fetthaltigem Abwasser;
- Figur 4 in einer Draufsicht eine schematische Zeichnung einer erfindungsgemäßen Vorrichtung zur Behandlung von fetthaltigem Abwasser; und
- Figur 5 eine schematische Darstellung des erfindungsgemäßen Verfahrens.

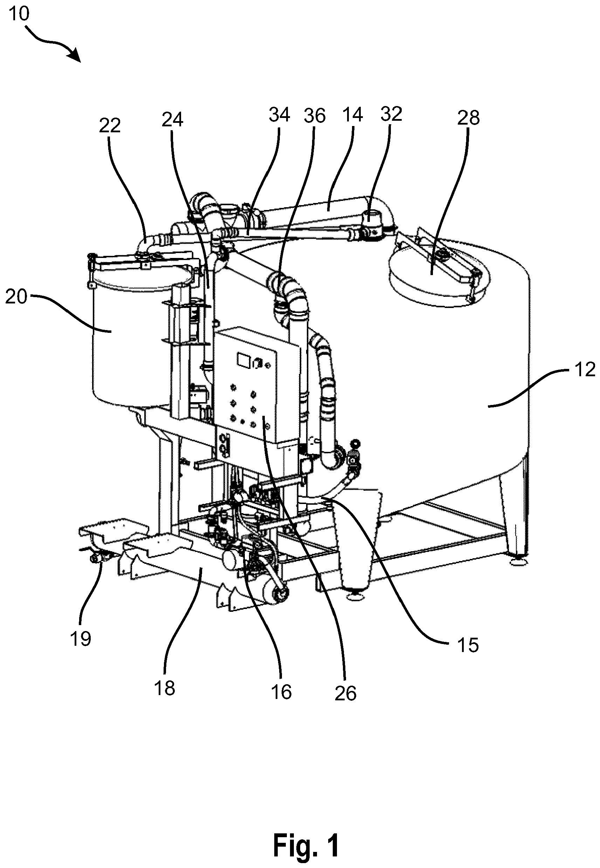

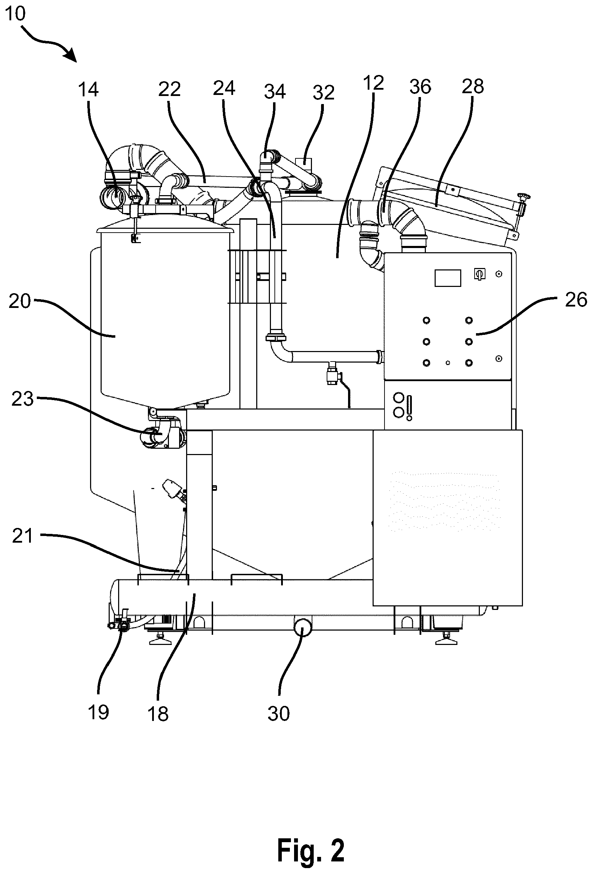

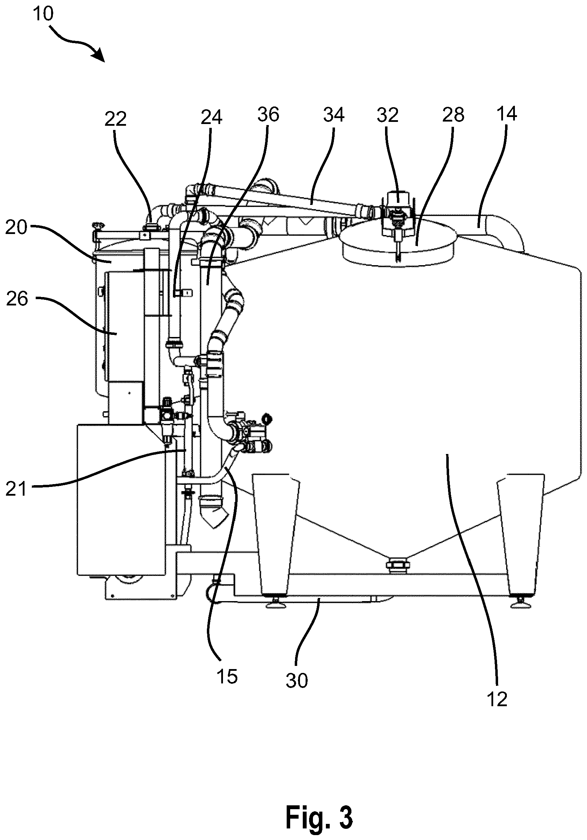

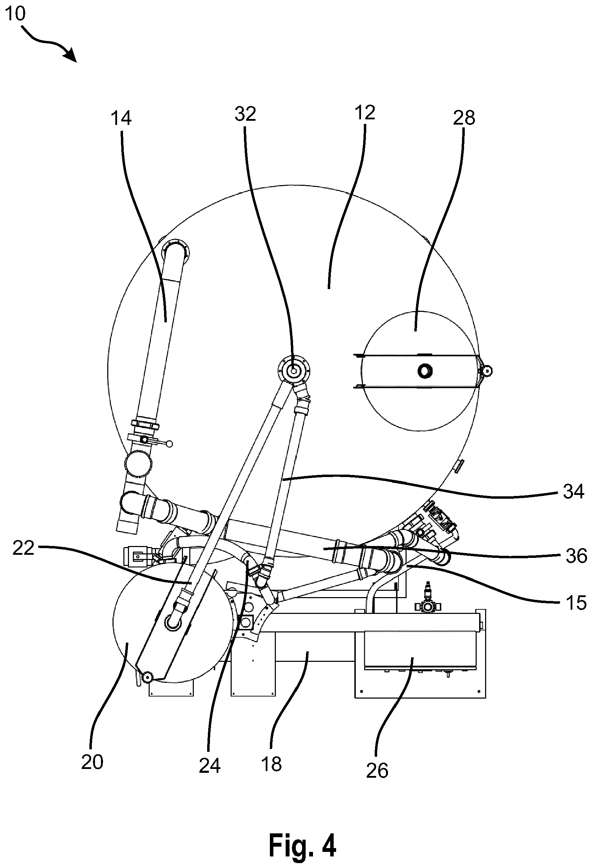

In den Figuren 1-4 ist eine Vorrichtung 10 zur Behandlung von fetthaltigem Abwasser gezeigt. Diese umfasst einen Vorabscheider 12, in dem das über den Zulauf 14 eingeleitete Abwasser zur Abtrennung von Fremdstoffen vorbehandelt wird. Im unteren Bereich des Vorabscheiders 12 ist eine Sammelzone für Sinkstoffe gebildet (nicht gezeigt). In separater Phase vorliegende Fette schwimmen auf dem Abwasser auf. Zwischen den Schwimmstoffen und den Sinkstoffen bildet sich so eine Pufferzone (nicht gezeigt) mit vorbehandeltem Abwasser. An den Vorabscheider 12 ist eine Transportleitung 15 angeschlossen, über die das vorbehandelte Abwasser aus der Pufferzone abgeleitet wird.

Die Transportleitung 15 führt zur Saugseite einer Pumpe 16 zum Eintragen von Gas in das vorbehandelte Abwasser für die Druckentspannungsflotation. Die Pumpe 16 ist an eine Lösungsstrecke 18 angeschlossen, die zur Aufspaltung von Emulsionen und zur Ausflockung von schaumgebundenen Fremdstoffen dient und als Rohr mit erweitertem Querschnitt ausgebildet ist. Am Ende der Lösungsstrecke 18 befindet sich ein Ventil 19, an dem das unter Druck mit Gas gesättigte Abwasser entspannt und ein Schaum gebildet wird.

Die Lösungsstrecke 18 ist mit einem Endabscheider 20 über eine Schaumleitung 21 verbunden. Das am Ventil 19 entspannte und aufgeschäumte Abwasser wird über die Schaumleitung 21 zum Endabscheider 20 zugeführt, der zur Abtrennung des mit Fremdstoffen angereicherten Schaums von gereinigtem Abwasser vorgesehen ist. Ein Überlauf 22 ist am Endabscheider 20 dafür vorgesehen, die im Schaum gebundenen Fremdstoffe von oben in den Vorabscheider 12 zurückzuleiten, während sich im Endabscheider 20 ansammelnde Sinkstoffe über eine Entsorgungsleitung 23 abgelassen werden können. Das gereinigte Abwasser wird über einen Abfluss 24 aus dem Endabscheider 20 direkt der Kanalisation zugeführt. Der Abfluss 24 weist hierbei eine umgedrehte U-Form auf, damit nur bei einer ausreichend großen Füllhöhe im Endabscheider 20 es zu einem Abfließen von Abwasser kommt und der Endabscheider 20 auf diese Weise konstant mit einer Menge an gereinigtem Abwasser gefüllt ist. Vorzugsweise ist der Endabscheider 20 im Wesentlichen vollständig mit dem gereinigten Abwasser gefüllt.

In einem Schaltschrank 26 ist die Steuerungselektronik untergebracht, die zur Regelung der Vorrichtung 10 verwendet wird.

Eine Serviceöffnung 28, die hier an der Oberseite des Vorabscheiders 12 angeordnet ist, dient als Zugang und kann beispielsweise zur Reinigung oder Wartung des Vorabscheiders 12 oder eines im Vorabscheider 12 angeordneten Innenfilters (nicht gezeigt) genutzt werden.

Ferner kann ein Grobfilter (nicht gezeigt) außerhalb des Vorabscheiders 12 angeordnet und zum Zurückhalten von größeren biologischen Fremdkörpern sowie von nichtbiologischen Objekten, wie Besteck, vorgesehen sein.

Alternativ können auch mehrere Filter vorgesehen sein. Beispielsweise kann ein Grobfilter zwischen dem Abwasserzulauf 14 und dem Vorabscheider 12 sowie ein zusätzlicher Innenfilter im Vorabscheider 12 mit jeweils individuellen Eigenschaften angeordnet sein.

Um die sich am Boden des Vorabscheiders 12 ansammelnden Sinkstoffe abzuleiten, ist ein Entsorgungsanschluss 30 vorgesehen. Über den Entsorgungsanschluss 30 ist außerdem eine Entleerung des Vorabscheiders 12 zur Entsorgung aller abgetrennten Fremdstoffe möglich.

Die Vorrichtung 10 kann ferner einen Behälter (nicht gezeigt) für Behandlungsmittel, wie etwa Fettspalter, Deemulgatoren, pH-Modifikatoren, und Flotationshilfsmittel, aufweisen. Die Behandlungsmittel können dem Abwasser über entsprechende Anschlüsse zugeführt werden. Die Anschlüsse können der Lösungsstrecke 18 beziehungsweise der Pumpe 16 zum Eintragen von Gas nachgeschaltet, vorgeschaltet oder zwischen Zulauf 14 und Vorabscheider 12 angeordnet sein. Es können auch mehrere Behälter für verschiedene Behandlungsmittel vorgesehen sein.

Am Vorabscheider 12 ist eine Entlüftung 32 vorgesehen, die am höchsten Punkt des Vorabscheiders 12 angeordnet ist und zum Druckabbau bei hohen Systemdrücken genutzt werden kann. Zusätzlich ist die Entlüftung 32 über eine Entlüftungsleitung 34 mit dem Abfluss 24 verbunden, um zu verhindern, dass sich dort ein Druck aufbaut, der das Abfließen von gereinigtem Abwasser beeinträchtigt.

Ferner kann ein Notüberlauf 36 vorgesehen sein, um sicherzustellen, dass zuviel vorhandenes Abwasser in der Vorrichtung 10 abgeleitet und keine systemkritische Füllung erreicht wird.

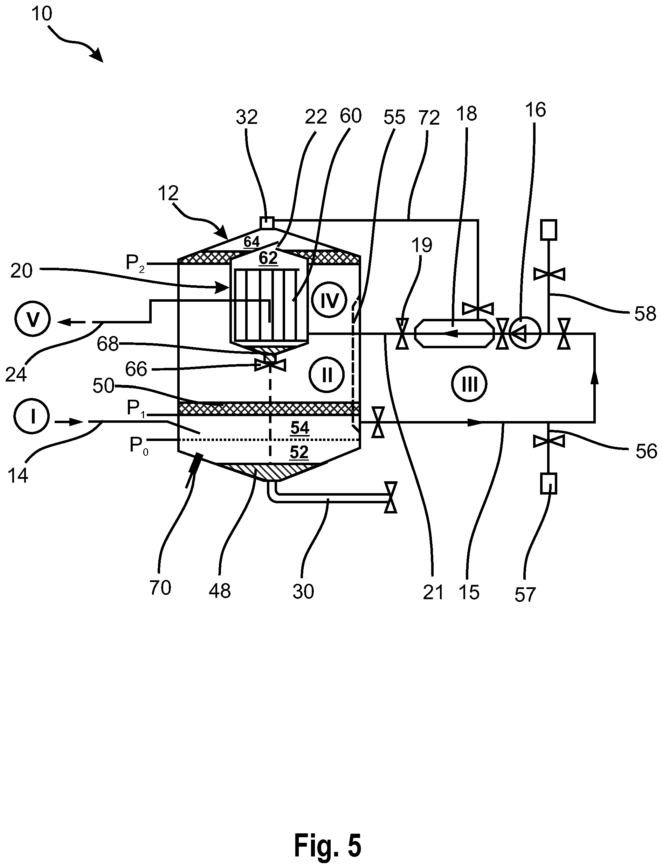

In Figur 5 ist das Verfahren zur Abwasserbehandlung schematisch in fünf Stufen dargestellt. Zusätzlich zu der Fließrichtung, sind auch zwei verschiedene Pegelstände P₁ und P₂ des Abwassers innerhalb des Vorabscheiders 12 eingezeichnet.

In der ersten Stufe I wird fetthaltiges Abwasser zur Behandlung in den Vorabscheider 12 eingeleitet. Der Zulauf 14 für das fetthaltige Abwasser liegt bevorzugt unterhalb des ersten Pegelstandes P₁. Durch die Einleitung des Abwassers kann der Pegelstand im Vorabscheider 12 bis auf den maximalen Pegelstand P₂ erhöht werden.

In der zweiten Stufe II des Verfahrens werden Sinkstoffe 48 und Schwimmstoffe 50, die ungebunden im Abwasser vorliegen, im Vorabscheider 12 durch Sedimentation beziehungsweise Auftrieb vom Abwasser getrennt. Die Sinkstoffe 48 sammeln sich in einer Sammelzone 52 am Boden des Vorabscheiders 12 und werden spätestens bei Erreichen des Entsorgungspegels P₀ über den Entsorgungsanschluss 30 abgelassen.

In der dritten Stufe III wird das in der zweiten Stufe II vorbehandelte Abwasser aus der Pufferzone 54, die sich zwischen der Schicht aus Sinkstoffen 48 und der Schicht aus Schwimmstoffen 50 befindet, hinter dem Grobfilter 55, der hier als Innenfilter vorgesehen ist, durch die Pumpe 16 angesaugt und über die Transportleitung 15 zur Lösungsstrecke 18 und von dort über die Schaumleitung 21 zum Endabscheider 20 weitergeleitet. Dadurch sinkt der Pegelstand des Abwassers im Vorabscheider 12. Der Ablauf zur Transportleitung 15 befindet sich entgegengesetzt zum Zulauf 14 und unterhalb des Pegelstandes P₁, auf den der Pegelstand des Abwassers während des Betriebs des Vorabscheiders 12 höchstens abgesenkt wird.

Die Transportleitung 15 kann einen ersten Anschluss 56 für einen Behälter 57 aufweisen. Über den ersten Anschluss 56 können dem vorbehandelten Abwasser in der Transportleitung 15 Behandlungsmittel aus dem Behälter 57 zugeführt werden, die die Abscheidung von Fremdstoffen begünstigen.

Die Transportleitung 15 führt das Abwasser zu der Pumpe 16, durch die das Abwasser unter Druck mit einem Gas, beispielsweise Luft, gesättigt wird. Das Gas kann dem Abwasser über einen zweiten Anschluss 58 zugeführt werden, der auf der Saugseite der Pumpe 16 in der Transportleitung 15 vorgesehen ist. In der auf der Druckseite der Pumpe angeordneten Lösungsstrecke 18 hat das Abwasser ausreichend Zeit, um mit dem Gas zu reagieren. Die Lösungsstrecke 18 ist bevorzugt ein Teil der Transportleitung 15, besonders bevorzugt ein Teil der Transportleitung 15 mit erweitertem Querschnitt. Am Ende der Lösungsstrecke 18 befindet sich ein Ventil 19, an dem das Abwasser durch Verringerung des Drucks entspannt wird. Durch das Entspannen des mit Druckgas gesättigten Abwassers bildet sich ein Schaum, der die aus dem Abwasser abgetrennten Fremdstoffe bindet.

In der vierten Stufe IV wird der Schaum über die an die Lösungsstrecke 18 angeschlossene Schaumleitung 21 in den Endabscheider 20hinein und in einer Spiralbewegung durch eine als archimedische Spirale ausgebildete Struktur 60 geleitet, wodurch die Verweildauer des Abwassers im Endabscheider 20 erhöht wird. Der Endabscheider 20 kann vorteilhaft innerhalb des Vorabscheiders 12 angeordnet sein. Der Überlauf 22 für den Schaum ist im konisch zulaufenden Sammelraum 62 am oberen Ende des Endabscheiders 20 ist angeordnet., Durch den Überlauf 22 werden die im Schaum gebundenen Fremdstoffe direkt, von oben, in den Aufnahmeraum 64 des Vorabscheiders 12 weitergeleitet. Die Schicht aus Schwimmstoffen 50 im Vorabscheider 12, auf die der mit den Fremdstoffen angereicherte Schaum von oben aufgebracht wird, wirkt hierbei als Sperrschicht, sodass es zu keiner Verwirbelung des Abwassers in der Pufferzone 54 kommt. Im Schaum gegebenenfalls vorhandene weitere Sinkstoffe 68 können sich am Boden des Endabscheiders 20 sammeln. Am Boden des Endabscheiders 20 ist ein Ablassventil 66 vorgesehen, über das die im Endabscheider 20 gesammelten weiteren Sinkstoffe 68 in die Sammelzone 52 im Vorabscheider 12 abgelassen werden können.

In einer alternativen, in dieser Figur nicht dargestellten Ausführungsform können die Sinkstoffe 68 über die am Endabscheider 20 vorgesehene Entsorgungsleitung 23 direkt aus dem Endabscheider 20 heraus geleitet werden.

In der fünften Stufe V wird das gereinigte Abwasser unterhalb des Schaums aus dem Endabscheider 20 abgeleitet und über den Abfluss 24 direkt in die Kanalisation eingeleitet. Das abgeschiedene Abwasser wird im Endabscheider 20 gesammelt, bis der hydrostatische Druck im Endabscheider 20 dazu ausreicht, dass die Wassersäule im ansteigenden Rohrabschnitt den Scheitelpunkt des umgedreht U-förmig ausgebildeten Abflusses 24 überschreitet und es so zum Abfließen der überschüssigen Menge an gereinigtem Abwasser kommt. Auf diese Weise ist im Endabscheider 20 stets eine bestimmte Menge an gereinigtem Abwasser vorhanden, das lediglich durch den in den Endabscheider 20 eintretenden Schaum verdrängt wird.

Durch den Überlauf 22 ist der Endabscheider 20 strömungsabwärts direkt mit dem Vorabscheider 12 verbunden, sodass ein im Wesentlichen kontinuierlicher Kreisbetrieb mit Rückführung der im Endabscheider 20 abgeschiedenen Fremdstoffe in den Vorabscheider 12 ermöglicht wird.

Zur Regelung des Verfahrens kann eine Pegelsonde 70 vorgesehen sein, mit der der Abwasserpegel im Vorabscheider 12 bestimmt wird. Bei einem ersten Pegelstand P₁ reicht die vorhandene Abwassermenge nicht mehr aus, um das Verfahren durchzuführen, und das Verfahren schaltet in den Standby Modus, bis wieder ausreichend Abwasser zur Verfügung steht. Bei einem zweiten Pegelstand P₂ ist die maximal zulässige Abwassermenge im Vorabscheider 12 erreicht und es wird eine Notreaktion ausgelöst, die beispielsweise die Zuschaltung einer weiteren Pumpe zur Erhöhung des Abwasserdurchsatzes beinhalten kann.

An der Oberseite des Vorabscheiders 12 ist die Entlüftung 32 angeordnet, über die sich der Vorabscheider 12 sowie die Lösungsstrecke 18 entlüften lassen, um beispielsweise einen zu hohen Anlagendruck abzubauen und eine Entspannung des mit Druckgas gesättigten Abwassers durchzuführen. Dazu kann die Lösungsstrecke 18 über eine Entlüftungsleitung 72 mit der Entlüftung 32 verbunden sein.

In einer nicht dargestellten Ausführungsform ist eine zusätzliche Verfahrensstufe zwischen der zweiten und der dritten Stufe vorgesehen, in der das vorbehandelte Abwasser aus dem Vorabscheider 12 zunächst durch eine Behandlungsschleife gepumpt wird, in der eine elektrostatische Behandlung mit einer regelbaren Elektrode stattfindet. Aus der Behandlungsschleife kann das elektrostatisch behandelte Abwasser über die Transportleitung 15 in die Lösungsstrecke 18 geleitet werden.

Die Reinigung der Anlage erfolgt durch das Abtanken des Vorabscheiders 12 über den Entsorgungsanschluss 30 sowie des Endabscheiders 20 über das dafür vorgesehenen Ablassventil 66, sobald ein bestimmter Verschmutzungsgrad erreicht ist. Der Abwasserpegel im Vorabscheider 12 wird dazu auf den Entsorgungspegel P₀ gesenkt, so dass nur eine geringe Abwassermenge zusammen mit den Fremdstoffen entsorgt werden muss. Die Grob- und Innenfilter 55 werden täglich, beziehungsweise wenn der Pegelstand es zulässt, gereinigt. Zusätzlich findet eine Reinigung des Überlaufs 22 über ein Reinigungsmodul statt, das über die Steuerungselektronik im Schaltschrank 26 gesteuert wird und den Überlauf 22 in regelmäßigen Abständen mit Klarwasser spült.

Durch Kombination einer Vortrennung mit Druckentspannungsflotation können niedrigere Grenzwerte eingehalten werden. Die Integration der Druckentspannungsflotation in die Transportleitung 15 in Verbindung mit einem leistungsfähigen Endabscheider 20 sowie die Rückführung von im Endabscheider 20 abgetrennten Abfallstoffen in den Vorabscheider 12 ermöglicht eine kompakte modulare Bauweise der Vorrichtung mit einem Platzbedarf von nur etwa 7 m². Der Vorabscheider kann dabei ein Füllvolumen von etwa 400 bis 800 I, bevorzugt 450 bis 600 I aufweisen. Der Endabscheider hat vorzugsweise ein Füllvolumen von 80 bis 150 I, bevorzugt etwa 90 bis 120 I. Die Anlagenkapazität kann durch Zuschalten weiterer Behandlungselemente wie zusätzliche Pumpen und chemische Behandlung weiter gesteigert werden, ohne dass ein erheblich größerer Bauraum benötigt wird. Die kontinuierliche Abwasserbehandlung und der Kreisbetrieb der Anlage ermöglicht außerdem eine Verlängerung der Entsorgungsintervalle.

## Patentansprüche

1. Verfahren zur Behandlung von fetthaltigem Abwasser in einer Vorrichtung (10), die einen Zulauf (14) für fetthaltiges Abwasser, einen Vorabscheider (12) zur Abtrennung von Sink- und Schwimmstoffen (48, 50), eine an den Vorabscheider (12) angeschlosseneTransportleitung (15), eine mit der Transportleitung (15) verbundene Lösungsstrecke (18) und einen über eine Schaumleitung (21) mit der Lösungsstrecke (18) verbundenen Endabscheider (20) umfasst, der strömungsabwärts direkt mit dem Vorabscheider (12) verbunden ist, wobei das Verfahren die folgenden Schritte umfasst:
a) das Abwasser wird in dem Vorabscheider (12) zur Abtrennung der Sink- und Schwimmstoffe (48, 50) vorbehandelt
b) das vorbehandelte Abwasser wird durch die Pumpe (16) angesaugt und aus dem Vorabscheider (12) über die Transportleitung (15) in die Lösungsstrecke (18) weitergeleitet, wobei das vorbehandelte Abwasser in der Lösungsstrecke (18) durch die Pumpe (16) unter Druck mit Gas übersättigt und danach auf einen geringeren Druck, insbesondere Normaldruck, entspannt, wobei in der Schaumleitung (21) ein Schaum gebildet wird und im Abwasser enthaltene Fremdstoffe ausflocken und sich in dem Schaum ansammeln; und
c) das entspannte Abwasser wird über die Schaumleitung (21) dem Endabscheider (20) zugeführt, in dem der Schaum mit den Fremdstoffen von gereinigtem Abwasser abgetrennt wird,
wobei der Schaum mit den Fremdstoffen aus dem Endabscheider (20) in den Vorabscheider (12) zurückgeführt und auf eine Schwimmstoffschicht aufgebracht wird und das gereinigte Abwasser aus dem Endabscheider (20) abgeleitet wird.

2. Verfahren nach Anspruch 1, **dadurch gekennzeichnet, dass** das Abwasser kontinuierlich durch die Behandlungsstufen a) bis c) geführt wird.

3. Verfahren nach einem der vorhergehenden Ansprüche, **dadurch gekennzeichnet, dass** das Abwasser im Endabscheider (20) in einer Spiralbewegung geführt wird.

4. Verfahren nach einem der vorhergehenden Ansprüche, **dadurch gekennzeichnet, dass** das Verfahren bei Erreichen eines ersten Pegelstands P₁ im Vorabscheider (12) unterbrochen wird und/oder bei Erreichen eines zweiten Pegelstands P₂ eine Notreaktion ausgeführt wird.

5. Verfahren nach einem der vorhergehenden Ansprüche, **dadurch gekennzeichnet, dass** das vorbehandelte Abwasser aus dem Vorabscheider (12) vor oder nach der Lösungsstrecke mit weiteren Behandlungsmitteln versetzt wird.

6. Vorrichtung (10) zur Durchführung des Verfahrens gemäß einem der Ansprüche 1 bis 5, mit einem Zulauf (14) für fetthaltiges Abwasser, einem Vorabscheider (12) zur Abtrennung von Sink- und Schwimmstoffen (48, 50), der eine Sammelzone (52) für Sinkstoffe (48) aufweist, einer an den Vorabscheider (12) angeschlossenenTransportleitung (15) für das vorbehandelte Abwasser, einer mit der Transportleitung (15) für das vorbehandelte Abwasser verbundenen Lösungsstrecke (18), einer Pumpe (16) zum Eintragen von Gas in das vorbehandelte Abwasser in der Lösungsstrecke (18) und einem mit der Lösungsstrecke (18) über eine Schaumleitung (21) verbundenen Endabscheider (20) zur Abtrennung des Schaums mit Fremdstoffen von gereinigtem Abwasser, wobei die Transportleitung (15) zu einer Saugseite der Pumpe (16) führt und der Endabscheider (20) strömungsabwärts direkt mit dem Vorabscheider (12) verbunden ist.

7. Vorrichtung nach Anspruch 6, **dadurch gekennzeichnet, dass** der Endabscheider (20) innerhalb des Vorabscheiders (12) angeordnet ist.

8. Vorrichtung nach einem der Ansprüche 6 oder 7, **dadurch gekennzeichnet, dass** der Endabscheider (20) einen konisch zulaufenden Sammelraum (62) mit einem Überlauf (22) für den Schaum aufweist, wobei der Überlauf (22) zur direkten Weiterleitung der Fremdstoffe in den Aufnahmeraum (64) des Vorabscheiders (12) vorgesehen ist.

9. Vorrichtung nach einem der Ansprüche 6 bis 8, **dadurch gekennzeichnet, dass** vor der Lösungsstrecke (18) ein Anschluss (58) zur Zuführung von Gas angeordnet ist, und dass die Pumpe (16) zum Eintragen von Gas eine Flotationspumpe, insbesondere eine Mehrphasenpumpe, zur Übersättigung des vorbehandelten Abwassers mit Gas ist.

10. Vorrichtung nach einem der Ansprüche 6 bis 9, **dadurch gekennzeichnet, dass** vor und/oder nach der Lösungsstrecke (18) ein Anschluss (56) zur Zuführung von Behandlungsmitteln in die Transportleitung (15) vorgesehen ist.

## Claims

1. A method for the treatment of fat-containing wastewater in a device (10) which comprises an inlet (14) for fat-containing wastewater, a pre-separator (12) for separating settling and floating matter (48, 50), a transport pipe (15) connected to the pre-separator (12), a dissolution path (18) connected to the transport pipe (15), and a final separator (20) which is connected to the dissolution path (18) via a scum pipe (21) and is connected on the downstream side directly to the pre-separator (12), the method comprising the following steps:
a) pretreating the wastewater in the pre-separator (12) for separating the settling and floating matter (48, 50);
b) sucking the pretreated wastewater by the pump (16) and conveying it from the pre-separator (12) into the dissolution path (18) via the transport pipe (15), the pretreated wastewater being supersaturated with gas by the pump (16) under pressure in the dissolution path (18) and then expanding to a lower pressure, in particular normal pressure, a scum being formed in the scum pipe (21), and foreign matter contained in the wastewater flocculating and accumulating in the scum; and
c) feeding the expanded wastewater via the scum pipe (21) to the final separator (20), in which the scum with the foreign matter is separated from purified wastewater;
wherein the scum with the foreign matter is returned from the final separator (20) into the pre-separator (12) and applied onto a floating matter layer, and the purified wastewater is drained from the final separator (20).

2. The method according to claim 1, **characterized in that** the wastewater is continuously passed through the treatment stages a) to c).

3. The method according to either of the preceding claims, **characterized in that** the wastewater is guided in a spiral movement in the final separator (20).

4. The method according to any of the preceding claims, **characterized in that** the method is interrupted when a first level P₁ is reached in the pre-separator (12), and/or an emergency reaction is carried out when a second level P₂ is reached.

5. The method according to any of the preceding claims, **characterized in that** further treatment agents are added to the pretreated wastewater from the pre-separator (12) upstream or downstream of the dissolution path.

6. A device (10) for carrying out the method according to any of claims 1 to 5, comprising an inlet (14) for fat-containing wastewater, a pre-separator (12) for separating settling and floating matter (48, 50), the pre-separator (12) including a collecting zone (52) for settling matter (48), a transport pipe (15) for the pretreated wastewater connected to the pre-separator (12), a dissolution path (18) connected to the transport pipe (15) for the pretreated wastewater, a pump (16) for introducing gas into the pretreated wastewater in the dissolution path (18), and a final separator (20) connected to the dissolution path (18) via a scum pipe (21) and intended for separating the scum with foreign matter from purified wastewater, wherein the transport pipe (15) leads to a suction side of the pump (16), and the final separator (20) is connected on the downstream side directly to the pre-separator (12).

7. The device according to claim 6, **characterized in that** the final separator (20) is arranged inside the pre-separator (12).

8. The device according to either of claims 6 or 7, **characterized in that** the final separator (20) includes a conically tapered collecting chamber (62) having an overflow (22) for the scum, the overflow (22) being provided for directly conveying the foreign matter into the receiving chamber (64) of the pre-separator (12).

9. The device according to any of claims 6 to 8, **characterized in that** a connection (58) for supplying gas is arranged upstream of the dissolution path (18), and **in that** the pump (16) for introducing gas is a flotation pump, in particular a multiphase pump, for supersaturating the pretreated wastewater with gas.

10. The device according to any of claims 6 to 9, **characterized in that** a connection (56) for feeding treatment agents into the transport pipe (15) is provided upstream and/or downstream of the dissolution path (18).

## Revendications

1. Procédé de traitement d'eaux usées contenant des graisses dans un dispositif (10) qui comporte une amenée (14) pour les eaux usées contenant des graisses, un pré-séparateur (12) pour la séparation de matières déposées et flottantes (48, 50), une conduite de transport (15) raccordée au pré-séparateur (12), un trajet de dissolution (18) relié à la conduite de transport (15), et un séparateur final (20) qui est relié au trajet de dissolution (18) par l'intermédiaire d'une conduite de mousse (21) et qui est directement relié au pré-séparateur (12) du côté aval, le procédé comprenant les étapes suivantes :
a) les eaux usées sont prétraitées dans le pré-séparateur (12) pour la séparation des matières déposées et flottantes (48, 50),
b) les eaux usées prétraitées sont aspirées par la pompe (16) et dirigées hors du pré-séparateur (12) dans le trajet de dissolution (18) par l'intermédiaire de la conduite de transport (15), les eaux usées prétraitées étant sursaturées en gaz par la pompe (16) sous pression dans le trajet de dissolution (18) et se détendant ensuite à une pression inférieure, en particulier une pression normale, une mousse étant produite dans la conduite de mousse (21), et des matières étrangères contenues dans les eaux usées floculant et s'accumulant dans la mousse ; et
c) les eaux usées détendues sont amenées, par l'intermédiaire de la conduite de mousse (21), au séparateur final (20) dans lequel la mousse contenant les matières étrangères est séparée des eaux usées purifiées,
la mousse contenant les matières étrangères étant ramenée du séparateur final (20) au pré-séparateur (12) et étant appliquée sur une couche de matières flottantes, et les eaux usées purifiées étant évacuées du séparateur final (20).

2. Procédé selon la revendication 1, **caractérisé en ce que** les eaux usées sont continuellement dirigées à travers les étapes de traitement a) à c).

3. Procédé selon l'une des revendications précédentes, **caractérisé en ce que** les eaux usées sont dirigées dans un mouvement en spirale dans le séparateur final (20).

4. Procédé selon l'une des revendications précédentes, **caractérisé en ce que** le procédé est interrompu lorsqu'un premier niveau P₁ est atteint dans le pré-séparateur (12), et/ou **en ce qu'**une réaction d'urgence est réalisée lorsqu'un deuxième niveau P₂ est atteint.

5. Procédé selon l'une des revendications précédentes, **caractérisé en ce que** d'autres agents de traitement sont ajoutés aux eaux usées prétraitées provenant du pré-séparateur (12) en amont ou en aval du trajet de dissolution.

6. Dispositif (10) pour la réalisation du procédé selon l'une des revendications 1 à 5, comportant une amenée (14) pour des eaux usées contenant des graisses, un pré-séparateur (12) pour la séparation de matières déposées et flottantes (48, 50) qui présente une zone collectrice (52) pour des matières déposées (48), une conduite de transport (15) raccordée au pré-séparateur (12) pour les eaux usées prétraitées, un trajet de dissolution (18) relié à la conduite de transport (15) pour les eaux usées prétraitées, une pompe (16) pour l'apport de gaz dans les eaux usées prétraitées dans le trajet de dissolution (18), et un séparateur final (20) qui est relié au trajet de dissolution (18) par l'intermédiaire d'une conduite de mousse (21) pour séparer la mousse contenant des matières étrangères des eaux usées purifiées, la conduite de transport (15) menant vers un côté aspiration de la pompe (16), et le séparateur final (20) étant directement relié au pré-séparateur (12) du côté aval.

7. Dispositif selon la revendication 6, **caractérisé en ce que** le séparateur final (20) est agencé à l'intérieur du pré-séparateur (12).

8. Dispositif selon l'une des revendications 6 ou 7, **caractérisé en ce que** le séparateur final (20) présente un espace collecteur (62) effilé comportant un trop-plein (22) pour la mousse, le trop-plein (22) étant prévu pour le guidage direct des matières étrangères dans l'espace de réception (64) du pré-séparateur (12).

9. Dispositif selon l'une des revendications 6 à 8, **caractérisé en ce qu'**un raccord (58) pour l'amenée de gaz est agencé en amont du trajet de dissolution (18), et **en ce que** la pompe (16) pour l'apport de gaz est une pompe de flottation, en particulier une pompe multiphasique pour la sursaturation des eaux usées prétraitées en gaz.

10. Dispositif selon l'une des revendications 6 à 9, **caractérisé en ce qu'**un raccord (56) pour l'amenée d'agents de traitement dans la conduite de transport (15) est prévu en amont et/ou en aval du trajet de dissolution (18).
